# EUROPÄISCHE PATENTSCHRIFT

(11) **EP 1 998 091 B1**
(45) Veröffentlichungstag und Bekanntmachung des Hinweises auf die Patenterteilung: **30.10.2019**
(21) Anmeldenummer: 08008801.6
(22) Anmeldetag: 10.05.2008
(51) Int. Cl.: F16K 11/20, F16K 39/02, B66D 3/18, F15B 13/04

(54) **Pneumatische Steuereinrichtung für ein Drucklufthebezeug**
Pneumatic control device for a pressurized air hoist
Dispositif de commande pneumatique pour un outil de levage à air comprimé

(30) Priorität: 29.05.2007 DE 102007025059
(43) Veröffentlichungstag der Anmeldung: 03.12.2008
(73) Patentinhaber: KONECRANES Lifting Sytems GmbH, 40789 Monheim (DE)
(72) Erfinder: Reuter, Bernd, 40764 Langenfeld (DE); Wallner, Oliver, 42719 Solingen (DE)
(74) Vertreter: Richly & Ritschel Patentanwälte PartG mbB

(56) Entgegenhaltungen:
- EP-A- 0 846 904
- EP-A- 1 279 873
- DE-B- 1 234 469
- DE-U1- 29 713 878
- US-A- 531 682
- US-B1- 6 427 982

## Beschreibung

Die Erfindung betrifft eine pneumatische Steuereinrichtung zum Anschließen an ein Drucklufthebezeug, insbesondere eine pneumatische Steuereinrichtung zum Anschließen an Drucklufthebezeuge, bei der die Kräfte zur Betätigung möglichst gering sind und die Steuereinrichtung proportional zur Betätigungskraft arbeitet.

Ein Drucklufthebezeug, beispielsweise als Druckluftbalancer, weist üblicherweise eine drehbare Seiltrommel auf, die entlang ihrer Drehachse verschiebbar angeordnet ist. Durch Drehen der Seiltrommel wird ein Seil abgerollt bzw. aufgerollt, an dem die zu haltende Last hängt. Über ein Kugelgewindegetriebe ist die Seiltrommel mit einem gasdruckbeaufschlagten Kolben verbunden. Das Kugelgewindegetriebe wandelt dabei eine Axialbewegung des Kolbens in eine Drehung und axiale Bewegung der Seiltrommel um. Mit solch einem Drucklufthebezeug kann die angehängte Last durch Druckluftzufuhr oder Druckluftablass angehoben oder abgelassen werden.

Pneumatische Steuereinrichtungen für Drucklufthebezeuge, wie z. B. so genannte Druckluftbalancer, sind in verschiedenen Ausführungen aus dem Stand der Technik bekannt.

In einer gängigen Ausführungsform einer pneumatischen Steuereinrichtung werden die Bewegungen eines Drucklufthebezeugs durch eine direkte manuelle Betätigung von Ventilen gesteuert. Als vorteilhaft hat sich hierbei der Einsatz von proportional arbeitenden Ventilen erwiesen, bei denen der Luftdurchlass proportional von der Betätigungskraft abhängt (siehe EP 1 279 873 B1). Vorteilhaft hierbei ist, dass der Bediener unterschiedliche Hub- oder Senkgeschwindigkeiten intuitiv über die Betätigungskraft steuern kann. Nachteilig an dieser Ausführungsform ist, dass die Betätigungskräfte für die pneumatische Steuereinrichtung nicht gleichbleibend sind, sondern von der Druckdifferenz von der Eingangs- zur Ausgangsseite abhängen. Damit ist ein feinfühliges Steuern eines Drucklufthebezeugs mittels solch einer pneumatischen Steuereinrichtung nicht unter allen Einsatzbedingungen möglich.

Eine weitere gängige Ausführungsform einer pneumatischen Steuereinrichtung umfasst die Verwendung eines 5/3-Wegeventils. Dieses 5/3-Wegeventil wird direkt durch die Kräfte des Bedieners betätigt und gibt je nach Betätigung Steuer-Schaltimpulse. Diese Steuer-Schaltimpulse steuern Ventile an, die wiederum die Druckluft dem Hebezeug zuführen oder Druckluft aus dem Hebezeug ablassen. Der Vorteil dieser Ausführungsform ist, dass die benötigte Bedienkraft unabhängig von den Druckverhältnissen im Drucklufthebezeug ist. Nachteilig an dieser Ausführungsform ist, dass die pneumatische Steuereinrichtung nicht proportional zur Bedienkraft arbeitet. Besonders nachteilig ist, dass dadurch keine feinfühlige Steuerung des Drucklufthebezeugs möglich ist.

Aus der DE 1 234 469 A ist eine Drucksteuereinrichtung für die Regelung des durchströmenden Mediums unter sich ändernden Einlassdruckbedingungen bekannt. Aus der US 531,682 A ist ein balanciertes Ventil bekannt. Weiterer Stand der Technik ist aus den Dokumenten DE 297 13 878 U1, EP 0 846 904 A1 und US 6,427,982 B1 bekannt.

Der Erfindung liegt daher die Aufgabe zugrunde, die Handhabung und Bedienbarkeit einer pneumatischen Steuereinrichtung zum Anschließen an ein Drucklufthebezeug zu verbessern.

Die Aufgabe wird dadurch gelöst mit den Merkmalen des Anspruchs 1, vorteilhafte Ausgestaltungen der Erfindung ergeben sich aus den Unteransprüchen.

Nach einem Gesichtspunkt der Erfindung umfasst die pneumatische Steuereinrichtung zum Anschließen an das Drucklufthebezeug mindestens eine schaltbare Ventilanordnung zur Steuerung verschiedener Betriebszustände des Hebezeugs, mindestens einen Anschluss zum Anschließen an eine Druckluftquelle, wenigstens einen druckbeaufschlagbaren Lastanschluss zum Anschließen an einen Hubzylinder oder dergleichen, mindestens eine Drosseleinrichtung zur betätigungsproportionalen Druckbeaufschlagung des Lastanschlusses und wenigstens ein handbedienbares Betätigungsorgan zur Realisierung verschiedener Schaltzustände der Ventilanordnung, wobei das Betätigungsorgan mechanisch mit der

Drosseleinrichtung zusammenwirkt, wobei die Drosseleinrichtung mindestens einen verstellbaren Drosselkolben umfasst, der in zwei mögliche Stellrichtungen druckvorbeaufschlagt ist, umfasst.

Die pneumatische Steuereinrichtung steuert wenigstens die Betriebszustände Druckluftzufuhr zum Drucklufthebezeug, Halten der Druckluft im Drucklufthebezeug und Druckluftablass aus dem Drucklufthebezeug. Die unterstützten Betriebszustände sind abhängig von der eingesetzten schaltbaren Ventilanordnung. Erfindungsgemäß ist als schaltbarer Ventilanordnung ein 3/3-Wegeventil vorgesehen, dass als schaltbarer Ventilkörper einen ersten und einen zweiten Drosselkolben umfasst. Der Begriff schaltbar im Sinne der Erfindung umfasst auch sogenannte Proportionalventile, die keine diskreten Schaltstellungen im eigentlichen Sinne ermöglichen.

Die Drosselkolben können beispielsweise axial verschiebbar und federbelastet in einem Ventilgehäuse der Ventilanordnung gelagert sein.

Besonders vorteilhaft ist es, wenn der Querschnitt der Drosselkolben jeweils in axialer Richtung abnimmt, so dass der Querschnitt eines von dem betreffenden Drosselkolben verschließbaren Drosselkanals proportional zur axialen Bewegung des Drosselkanals zunimmt, wobei der Querschnitt des Drosselkanals bei maximaler axialer Auslenkung des jeweiligen Drosselkolbens maximal ist. Hierdurch wird eine proportionale Veränderung des Luftflusses über den Betätigungsweg der Drosselkolben erzielt. Vorteilhaft ist es, wenn die Querschnittsgeometrie der Drosselkolben so gewählt ist, dass der Überstromquerschnitt der Drosselkanäle beim Verschieben der Drosselkolben jeweils aus einer Ausgangsstellung in eine Endstellung progressiv zunimmt.

Erfindungsgemäß weisen die Drosselkolben jeweils pneumatisch wirksame Steuerflächen auf, wobei auf die Steuerflächen jeweils der Betriebsdruck des Lastanschlusses wirkt. Hierdurch wird durch verhältnismäßig einfache Art und Weise eine Druckvorbeaufschlagung der Drosselkolben mit dem in der jeweiligen Leitung vorherrschenden Betriebsdruck erzielt. Zur Betätigung des betreffenden Drosselkolbens muss je nach Größe der hydraulisch wirksamen Steuerfläche nur noch eine verhältnismäßig geringe Bedienkraft aufgebracht werden. Im günstigsten Fall sind nur die Federkraft der auf die Drosselkolben einwirkenden Feder und die Lagerreibung sowie die Haftreibung der Dichtungen zu überwinden. Erfindungsgemäß werden so die Bedienkräfte für beispielsweise die Auf- und Abbewegung einer Last mittels eines Hebezeugs gering und vor allem in bei verschiedenen Drücken gleich gehalten.

Vorzugsweise verschließt der erste Drosselkolben in einer nicht betätigten Sperrstellung eine Druckluftzufuhr zu dem Lastanschluss, wohingegen der zweite Drosselkolben in einer nicht betätigten Sperrstellung einen Druckluftablass an die Atmosphäre verschließt.

Da zwischen dem Druckluftanschluss und dem Lastanschluss andere Druckdifferenzen herrschen als zwischen dem Lastanschluss und dem Druckluftablass, ist es zweckmäßig, wenn die Druckvorbeaufschlagung für beide Stelleinrichtungen der Ventilanordnung unterschiedlich ist. Hierzu kann vorgesehen sein, dass die pneumatisch wirksame Steuerfläche des ersten Drosselkolbens kleiner als diejenige des zweiten Drosselkolbens ist.

Bei der Vorrichtung gemäß der Erfindung ist vorgesehen, dass das Ventilgehäuse zwei Vorsteuerkammern umfasst, die über Druckausgleichskanäle an die lastseitige Druckluftleitung angeschlossen sind, so dass in den Vorsteuerkammern jeweils der sekundärseitige, lastabhängige Betriebsdruck anliegt.

Um die Druckdifferenz zwischen der Druckluftquelle und dem Lastanschluss zu minimieren, ist vorzugsweise ein steuerbarer Druckregler vorgesehen, der den am Druckluftanschluss anliegenden Druck in Abhängigkeit von dem am Lastanschluss anliegenden Druck begrenzt. Hierdurch ist ein besonders sanftes und feinfühliges Anfahren der angehängten Last möglich. Vorzugsweise ist hierzu ein Steuereingang des Druckreglers mit dem Lastanschluss der Ventilanordnung verschaltet, derart, dass ein lastseitiger Druckanstieg eine entsprechende Erhöhung des Arbeitsdrucks von der Druckluftquelle um einen vorher an dem Druckregler eingestellten Wert bewirkt, so lange bis lastseitig der Druck nicht mehr steigt.

Bei einer vorteilhaften Ausgestaltung einer Vorrichtung gemäß der Erfindung ist vorgesehen, dass als Betätigungsorgan ein relativ zu der Ventilanordnung bewegbarer und sich in Gewichtskraftrichtung der zu hebenden Last erstreckender Handgriff vorgesehen ist, der je nach Lage bezüglich der Ventilanordnung auf den einen oder anderen Drosselkolben einwirkt.

Ein Ausführungsbeispiel der Erfindung wird nachstehend anhand der beigefügten Figuren 1-4 näher beschrieben. Es zeigen:
- Figur 1: ein Schaltbild der pneumatischen Steuereinrichtung gemäß der Erfindung,
- Figur 2: einen Schnitt durch die Ventilanordnung der in Figur 1 dargestellten Steuereinrichtung als Schnittansicht im unbetätigten Zustand,
- Figur 3: die in Figur 1 dargestellte Ventilanordnung in einer ersten Schaltstellung und
- Figur 4: die Ventilanordnung gemäß Figur 1 betätigt in einer zweiten Schaltstellung.

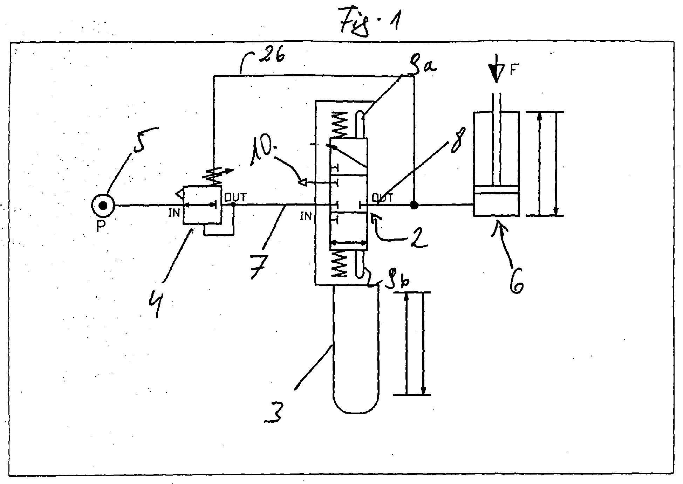

Die in Figur 1 dargestellte pneumatische Steuereinrichtung 1 umfasst eine Ventilanordnung 2, einen mechanischen Handgriff 3 und einen steuerbaren Druckregler 4. Die Steuereinrichtung 1 ist einerseits an eine Druckluftquelle 5 angeschlossen, andererseits an ein Drucklufthebezeug 6. Das Drucklufthebezeug 6 ist in Figur 1 schematisch als Kolben/Zylinder-Anordnung ausgebildet, die über die Druckluftquelle 5 mit Druck beaufschlagbar ist, derart, dass das Heben und Senken einer an das Drucklufthebezeug 6 angeschlagenen Last möglich ist.

Die in Figur 1 als Schaltbild dargestellte Ventilanordnung 2 ist als 3/3-Wegeventil ausgebildet und umfasst einen Druckluftanschluss 7 sowie einen Lastanschluss 8. Der als Inline-Handgriff ausgebildete Handgriff 3 wirkt als Betätigungsorgan unmittelbar mechanisch auf das federbelastete Schaltelement 9a, b der Ventilanordnung 2 ein. In der in Figur 1 dargestellten Mittelstellung der Ventilanordnung 2 ist der Lastanschluss 8 von der Druckluftquelle 5 getrennt, so dass eine an dem Drucklufthebezeug 6 angeschlagene Last gehalten wird. Eine Betätigung der federbelasteten Schaltelemente 9a, b bewirkt ein Heben oder Senken der Last. Wie dem Schaltbild zu entnehmen ist, bewirkt die Betätigung des ersten Schaltelements 9a ein Absenken der Last; der Lastanschluss 8 ist zu einem Druckluftablass 10 an die Atmosphäre freigeschaltet.

Eine Betätigung des Schaltelements 9 b durch Anheben des Handgriffs 3 bewirkt eine Verbindung von Druckluftanschluss 7 und Lastanschluss 8 (untere Schaltstellung in Figur 1) und somit ein Anheben der an dem Drucklufthebezeug 6 anbeschlagenen Last.

Entsprechend der Darstellung in Figur 1 sind der Handgriff 3 und die Ventilanordnung 2 relativ zueinander bewegbar, wobei die Ventilanordnung 2 vorzugsweise fest gelagert ist und der Handgriff 3 hierzu bewegbar ist. Der Handgriff 3 erstreckt sich im Wesentlichen in Gewichtskraftrichtung der an dem Drucklufthebezeug 6 anbeschlagenen Last, so dass eine Bewegung des Handgriffs 3 gegen die Gewichtskraftrichtung ein Anheben der Last und ein Betätigen des Handgriffs 3 in Gewichtskraftrichtung ein Absenken der Last bewirkt.

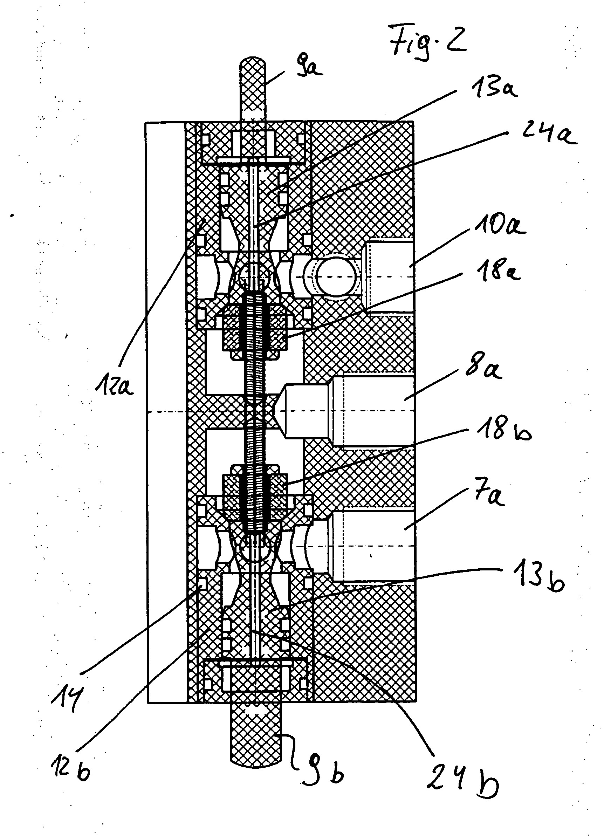

Die Ventilanordnung 2 wird nachstehend unter Bezugnahme auf die Figuren 2-4 erläutert. Die Ventilanordnung 2 umfasst ein Ventilgehäuse, an welchem Anschlussbohrungen 7a, 8a und 10a vorgesehen sind, wobei die Anschlussbohrung 7a als Druckluftanschluss, die Anschlussbohrung 8a als Lastanschluss und die Anschlussbohrung 10a als Druckluftablass vorgesehen sind. Das Ventilgehäuse 11 umfasst weiterhin zwei Ventileinsätze, 12a, 12b, in die jeweils ein als Ventilkörper wirkender Drosselkolben 13a, 13b eingesetzt ist. Im folgenden wird der Drosselkolben 13b als erster Drosselkolben bezeichnet, hingegen der Drosselkolben 13a als zweiter Drosselkolben.

Die Ventileinsätze 12a, 12b sind jeweils über nicht dargestellte O-Ring-Dichtungen in dem Ventilgehäuse 11 abgedichtet. In der Zeichnung sind lediglich die für die Aufnahme der O-Ring-Dichtungen vorgesehenen Nuten 14 dargestellt.

Die Drosselkolben 13a, 13b sind jeweils in von den Ventileinsätzen gebildeten Führungsbuchsen 15a, 15b axial verschieblich gelagert. An den Stirnseiten 16 des Ventilgehäuses 11 sind die Ventileinsätze 12a, 12b jeweils mit Deckeln 17 verschlossen, die umfänglich über ebenfalls nicht dargestellte O-Ring-Dichtungen abgedichtet sind. Die Deckel 17 sind darüber hinaus jeweils mittig von Fortsätzen der Drosselkolben 13a, 13b durchsetzt, die jeweils die Schaltelemente 9a, 9b bilden.

Die Drosselkolben 13a, 13b sind wiederum in den Führungsbuchsen 15a, 15b über nicht dargestellte O-Ring-Dichtungen abgedichtet. Die O-Ring-Dichtungen werden von den ebenfalls mit 14 bezeichneten, hierfür vorgesehenen Nuten aufgenommen.

An den von den Fortsätzen 9a, 9b abliegenden Enden der Drosselkolben 13a, 13b, sind diese jeweils mit einem Verschlusskörper 18a, 18b versehen, der jeweils mit einem Ventilsitz 19a, 19b zusammenwirkt. Die Ventilsitze 19a, 19b werden jeweils durch eine im Durchmesser gestufte und angeschrägte Überstromöffnung 20a, 20b gebildet, die mit dem betreffenden Drosselkolben 13a, 13b jeweils einen Drosselkanal bilden. Die Drosselkolben 13a, 13b werden jeweils mit den Druckfedern 21a, 21b in ihrer unbetätigten Ausgangslage gehalten, d.h. so, dass der Verschlusskörper 18a, 18b in dem zugehörigen Ventilsitz 19a, 19b gehalten wird und die betreffende Überstromöffnung 20a, 20b verschließt, sowie dies in Figur 2 dargestellt ist.

An ihrem jeweils von dem Verschlusskörper 18a, 18b abliegendem Ende sind die Drosselkolben 13a, 13b mit hydraulisch wirksamen Steuerflächen 22a, 22b versehen, die jeweils mit den Führungsbuchsen 15a, 15b eine Vorsteuerkammer 23a, 23b bilden. Die Vorsteuerkammer 23a kommuniziert über eine Druckausgleichsbohrung 24a, die den Drosselkolben 13a teilweise axial durchsetzt, mit der Anschlussbohrung 8a. Die Vorsteuerkammer 23b kommuniziert ebenfalls über eine Druckausgleichsbohrung 24b mit der Anschlussbohrung 8a. Sowohl in der Vorsteuerkammer 23a als auch in der Vorsteuerkammer 23b liegt immer der sekundärseitige Betriebsdruck an.

Hierdurch sind sowohl der Drosselkolben 13a als auch der Drosselkolben 13b soweit druckentlastet, dass zu deren Betätigung im Wesentlichen nur noch die Haftreibung der Dichtungen und die Federverspannung der Druckfeder 21a, 12b überwunden werden muss.

### Die Steuerfläche 22a ist größer als die Steuerfläche 22b

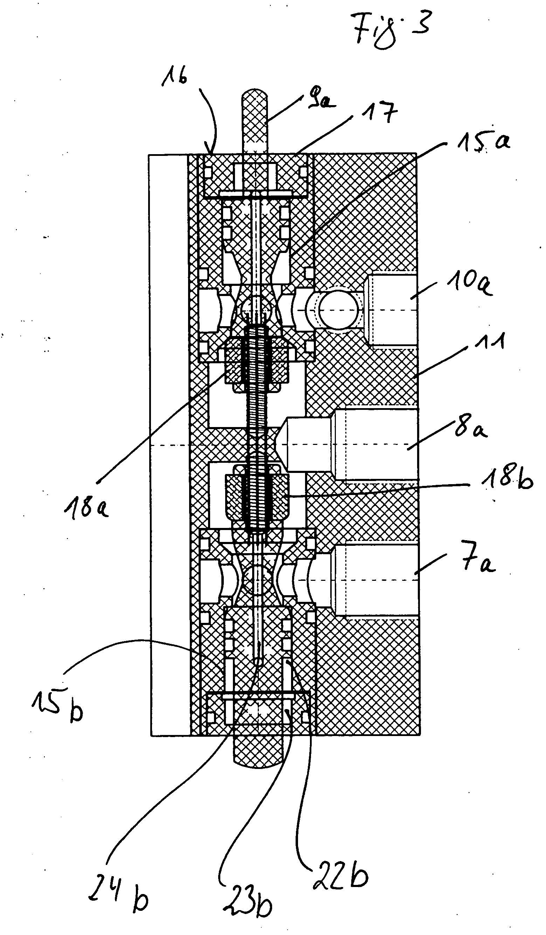

Wie eingangs bereits erwähnt, ist die Neutralstellung der Ventilanordnung in Figur 2 dargestellt. Die Verschlusskörper 18a, 18b werden jeweils über die Druckfedern 21a, 21b in dem zugehörigen Ventilsitz 19a, 19b gehalten. An der Anschlussbohrung 7a liegt der primäre Betriebsdruck an, an der Anschlussbohrung 8a der sekundärseitige Betriebsdruck, der lastinduziert ist. In dieser Schaltstellung wird die Last gehalten. Die Anschlussbohrung 10a ist drucklos. Wird nun der Drosselkolben 13b von der in Figur 2 gezeigten Stellung in die in Figur 3 gezeigte Stellung bewegt, so wird der Ventilkörper 18b aus dem zugehörigen Ventilsitz 19b gehoben. Die Überströmöffnung 20b wird freigegeben.

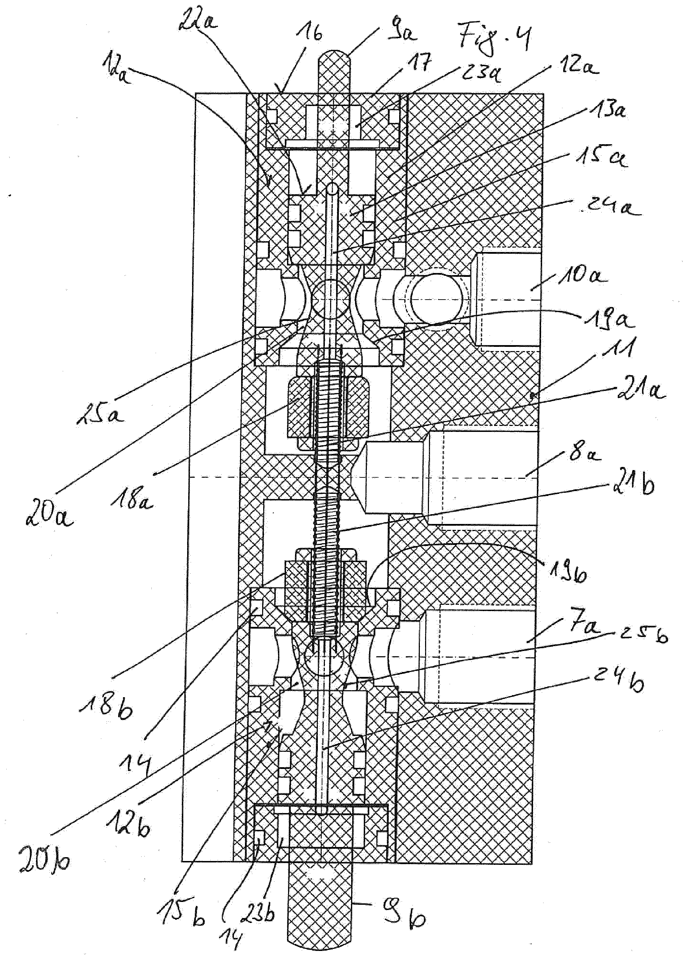

Wie insbesondere der vergrößerten Darstellung in Figur 4 zu entnehmen ist, besitzen beide Drosselkolben 13a, 13b jeweils einen im Querschnitt verjüngten Abschnitt 25a, 25b, der jeweils mit der Überströmöffnung 20a, 20b einen Drosselkanal bildet. Der Querschnitt des Drosselkanals ist abhängig von der axialen Stellung des betreffenden Drosselkolbens 13a, 13b. Die Außenkontur des verjüngten Abschnitts 25a, 25b des betreffenden Drosselkolbens 13a, 13b ist so gestaltet, dass sich der Querschnitt des jeweiligen Drosselkanals über den Weg des Drosselkolbens 13a, 13b verändert. Der Querschnitt nimmt mit zunehmenden Weg des Drosselkolben 13a, 13b progressiv zu, so dass in der in Figur 3 dargestellten Endlage des Drosselkolbens 13a ein maximaler Luftstrom von dem Druckluftanschluss 7 an den Lastanschluss 8 freigegeben wird. Die geometrische Beschaffenheit des Drosselkolbens 13a, 13b ermöglicht eine proportionale Veränderung des Luftflusses entsprechend dem Betätigungsweg.

Wirkt auf das in Figur 3 untere Schaltelement 9b keine Kraft mehr ein, so kehrt der Drosselkolben 13b in seine Ausgangslage zurück. (Neutralstellung in Figur 2).

Zum Ablassen der an das Drucklufthebezeug angeschlagenen Last ist es erforderlich, das Schaltelement 9a so zu betätigen, dass der Ventilkörper 18a aus dem zugehörigen Ventilsitz 19a gehoben wird, wie dies in Figur 4 dargestellt ist. In dieser Schaltstellung ist der Lastanschluss 8a mit dem Druckluftablass 10a verbunden, die Last wird abgesenkt. Wie vorstehend bereits erwähnt, ist auch der Drosselkolben 13a mit einem querschnittlich verjüngten Abschnitt 25a versehen, um eine wegproportionale Steuerung der Absenkgeschwindigkeit der Last zu ermöglichen.

Gegen sogenanntes "Abrauschen" der Last ist in dem Druckluftablass 10a eine Drossel vorgesehen, welche die maximal mögliche Abwärtsgeschwindigkeit für die angeschlagene Last definiert.

Um unterschiedliche Vorsteuerkräfte für die Drosselkolben 13a, 13b erzielen zu können, sind die hydraulisch wirksamen Steuerflächen 22a, 22b unterschiedlich bemessen, und zwar ist die wirksame Steuerfläche 22a größer als die wirksame Steuerfläche 22 b. Dies dient im Wesentlichen dazu, die Handkräfte für die Auf- und Abbewegung bei verschiedenen Drücken gleichzuhalten.

Bei einer verhältnismäßig hohen Druckdifferenz zwischen Primärseite und Sekundärseite der Ventilanordnung relativiert sich die Wirksamkeit der Vorsteuerung der Drosselkolben 13a, 13b. Um trotzdem eine geringere Betätigungskraft auch bei hohen Differenzdrücken zu ermöglichen, ist der mit 4 bezeichnete Druckregler (Air Relais) vorgesehen, der den primärseitigen Druck am Druckluftanschluss 7 auf einen geringeren Wert reduziert und dann über eine Rückkopplung 26 proportional mit dem lastabhängigen Druck am Lastanschluss 8 erhöht, und zwar um einen voreinstellbaren Druckwert. Solange der Druck am Lastanschluss 8 sich erhöht, wird über den Druckregler 4 der Druck am Druckluftanschluss 7 ebenfalls erhöht. Wird die Last gehoben, so findet an dem Lastanschluss keine Druckerhöhung mehr statt. Eine weitere Druckerhöhung am Druckluftanschluss findet ebenfalls nicht mehr statt.

### Bezugszeichenliste:

1) Steuereinrichtung
2) Ventilanordnung
3) Handgriff
4) Druckregler
5) Druckluftquelle
6) Drucklufthebezeug
7) Druckluftanschluss
8) Lastanschluss
9a), 9b) Schaltelemente
10) Druckluftablass
7 a), 8 a), 10 a), Anschlussbohrungen
11) Ventilgehäuse
12 a), 12b) Ventileinsätze
13 a), 13b) Drosselkolben
14) Nuten
15) Führungsbuchsen
16) Stirnseiten
17) Deckel
18 a), 18b) Verschlusskörper
19 a), 19b) Ventilsitz
20 a), 20b) Überströmöffnung
21 a), 21b) Druckfedern
22 a), 22b) Steuerflächen
23 a), 23b) Vorsteuerkammern
24 a), 24b) Druckausgleichsbohrungen
25 a), 25b) verjüngter Abschnitt der Drosselkolben
26) Rückkopplung

## Patentansprüche

1. Pneumatische Steuereinrichtung zum Anschließen an ein Drucklufthebezeug (6), mit wenigstens einer schaltbaren Ventilanordnung (2) zur Steuerung verschiedener Betriebszustände des Drucklufthebezeugs (6), mit wenigstens einem Anschluss zum Anschließen an eine Druckluftquelle (5), mit wenigstens einem druckbeaufschlagbaren Lastanschluss (8) zum Anschließen an einen Hubzylinder oder dergleichen, mit wenigstens einer Drosseleinrichtung zur betätigungsproportionalen Druckbeaufschlagung des Lastanschlusses (8), mit einem Ventilgehäuse (11) und mit wenigstens einem handbedienbaren Betätigungsorgan (3) zur Realisierung verschiedener Schaltzustände der Ventilanordnung (2), wobei das Betätigungsorgan (3) mechanisch mit der Drosseleinrichtung zusammenwirkt, wobei die Drosseleinrichtung
zwei verstellbare Drosselkolben (13a, 13b) umfasst, die jeweils in zwei möglichen Stellrichtungen druckvorbeaufschlagt sind, wobei als schaltbare Ventilanordnung ein 3/3-Wegeventil vorgesehen ist, das als schaltbare Ventilkörper den ersten und den zweiten Drosselkolben (13b, 13a) umfasst, wobei die Drosselkolben (13a, 13b) jeweils Steuerflächen (22a, 22b) aufweisen, wobei auf die Steuerflächen (22a, 22b) der Betriebsdruck des Lastanschlusses (8) wirkt, und wobei das Ventilgehäuse (11) zwei Vorsteuerkammern (23a, 23b) umfasst, die jeweils über Druckausgleichsbohrungen (24a, 24b) an den Lastanschluss (8) angeschlossen sind.

2. Steuereinrichtung nach Anspruch 1, **dadurch gekennzeichnet, dass** die Drosselkolben (13a, 13b) axial verschiebbar und federbelastet in dem Ventilgehäuse (11) gelagert sind.

3. Steuereinrichtung nach einem der Ansprüche 1 oder 2, **dadurch gekennzeichnet, dass** der Querschnitt der Drosselkolben (13a, 13b) in axialer Richtung abnimmt, so dass der Querschnitt eines jeweils von den Drosselkolben (13a, 13b) verschließbaren Drosselkanals proportional zur axialen Bewegung der Drosselkolben (13a, 13b) zunimmt, wobei vorzugsweise der Querschnitt des Drosselkanals bei maximaler Auslenkung des jeweiligen Drosselkolbens (13a, 13b) maximal ist.

4. Steuereinrichtung nach Anspruch 1, **dadurch gekennzeichnet, dass** der erste Drosselkolben (13b) in einer nicht betätigten Sperrstellung eine Druckluftzufuhr zu dem Lastanschluss (8) verschließt und dass der zweite Drossel kolben (13a) in einer nicht betätigten Sperrstellung einen Druckluftablass an die Atmosphäre verschließt.

5. Steuereinrichtung nach einem der Ansprüche 1 oder 4, **dadurch gekennzeichnet, dass** die pneumatisch wirksame Steuerfläche (22b) des ersten Drosselkolbens (13b) kleiner als diejenige des zweiten Drosselkolbens (13a) ist.

6. Steuereinrichtung nach einem der Ansprüche 1 bis 5, **dadurch gekennzeichnet, dass** dem Druckluftanschluss (7) ein steuerbarer Druckregler (4) vorgeschaltet ist.

7. Steuereinrichtung nach Anspruch 6, **dadurch gekennzeichnet, dass** ein Steuereingang des Druckreglers (4) mit dem Lastanschluss (8) der Ventilanordnung (2) verschaltet ist, derart, dass ein lastseitiger Druckanstieg eine proportionale Erhöhung des Arbeitsdrucks von der Druckluftquelle um einen vorher eingestellten Wert bewirkt.

8. Steuereinrichtung nach einem der Ansprüche 1 bis 7, **dadurch gekennzeichnet, dass** als Betätigungsorgan ein relativ zu der Ventilanordnung (2) bewegbarer und sich in Gewichtskraftrichtung der zu hebenden Last erstreckender Handgriff (3) vorgesehen ist, der je nach Lage bezüglich der Ventilanordnung (2) auf den einen oder anderen Drosselkolben (13a, 13b) betätigend einwirkt.

9. Steuereinrichtung nach einem der Ansprüche 1 bis 8, **dadurch gekennzeichnet, dass** in dem Druckluftablass (10) eine Drossel vorgesehen ist.

## Claims

1. Pneumatic control installation for connecting to a compressed-air hoist (6), having at least one switchable valve assembly (2) for controlling different operating states of the compressed-air hoist (6), having at least one connector for connecting to a compressed-air source (5), having at least one pressurization-capable load connector (8) for connecting to a lifting cylinder or the like, having at least one throttle installation for pressurizing the load connector (8) in a activation-proportional manner, having a valve housing (11), and having at least one manually operable activation member (3) for implementing different switching states of the valve assembly (2), wherein the activation member (3) mechanically interacts with the throttle installation, wherein the throttle installation comprises two adjustable throttle pistons (13a, 13b) which are in each case pre-pressurized in two potential positions, wherein a 3/3-way valve which as switchable valve bodies comprises the first and the second throttle piston (13b, 13a) is provided as the switchable valve assembly, wherein the throttle pistons (13a, 13b) have in each case control surfaces (22a, 22b), wherein the operating pressure of the load connector (8) acts on the control surfaces (22a, 22b), and wherein the valve housing (11) has two pilot chambers (23a, 23b) which are in each case connected to the load connector (8) by way of pressure-equalization bores (24a, 24b).

2. Control installation according to Claim 1, **characterized in that** the throttle pistons (13a, 13b) are mounted in the valve housing (11) so as to be axially displaceable and spring loaded.

3. Control installation according to one of Claims 1 or 2, **characterized in that** the cross section of the throttle pistons (13a, 13b) decreases in the axial direction such that the cross section of a throttle duct that is in each case closable by the throttle pistons (13a, 13b) increases proportionally to the axial movement of the throttle pistons (13a, 13b), wherein the cross section of the throttle duct is preferably at maximum at a maximum deflection of the respective throttle piston (13a, 13b).

4. Control installation according to Claim 1, **characterized in that** the first throttle piston (13b) in a non-activated blocking position closes a compressed-air infeed to the load connector (8), and **in that** the second throttle piston (13a) in a non-activated blocking position closes a compressed-air outlet to the atmosphere.

5. Control installation according to one of Claims 1 or 4, **characterized in that** the pneumatically effective control surface (22b) of the first throttle piston (13b) is smaller than that of the second throttle piston (13a).

6. Control installation according to one of Claims 1 to 5, **characterized in that** a controllable pressure regulator (4) is disposed upstream of the compressed-air connector (7).

7. Control installation according to Claim 6, **characterized in that** a control input of the pressure regulator (4) is switched with the load connector (8) of the valve assembly (2) in such a manner that a pressure increase on the load side causes a proportional increase in the operating pressure from the compressed-air source by a previously set value.

8. Control installation according to one of Claims 1 to 7, **characterized in that** a handle (3) which is movable relative to the valve assembly (2) and extends in the direction of the weight force of the load to be lifted and, depending on the position in relation to the valve assembly (2), acts in an activating manner on the one or the other throttle piston (13a, 13b), is provided as an activation member.

9. Control installation according to one of Claims 1 to 8, **characterized in that** a throttle is provided in the compressed-air outlet (10).

## Revendications

1. Dispositif de commande pneumatique pour le raccordement à un outil de levage à air comprimé (6), comprenant au moins un agencement de soupape commutable (2) pour la commande de différents états de fonctionnement de l'outil de levage à air comprimé (6), au moins un raccord pour le raccordement à une source d'air comprimé (5), au moins un raccord de charge (8) pouvant être sollicité en pression pour le raccordement à un cylindre de levage ou similaire, au moins un dispositif d'étranglement pour la sollicitation en pression, proportionnelle à l'actionnement, du raccord de charge (8), un boîtier de soupape (11) et au moins un organe d'actionnement (3) pouvant être commandé à la main pour réaliser différents états de commutation de l'agencement de soupape (2), l'organe d'actionnement (3) coopérant mécaniquement avec le dispositif d'étranglement, le dispositif d'étranglement comprenant deux pistons d'étranglement déplaçables (13a, 13b), qui sont chacun précontraints par pression dans deux directions de commande possibles, une soupape à 3/3 voies étant prévue en tant qu'agencement de soupape commutable, laquelle comprend, en tant que corps de soupape commutable, le premier et le deuxième piston d'étranglement (13b, 13a), les pistons d'étranglement (13a, 13b) présentant chacun des surfaces de commande (22a, 22b), la pression de fonctionnement du raccord de charge (8) agissant sur les surfaces de commande (22a, 22b) et le boîtier de soupape (11) comprenant deux chambres pilotes (23a, 23b) qui sont chacune raccordées par le biais d'alésages d'équilibrage de pression (24a, 24b) au raccord de charge (8).

2. Dispositif de commande selon la revendication 1, **caractérisé en ce que** les pistons d'étranglement (13a, 13b) sont supportés de manière déplaçable axialement et de manière sollicitée par ressort dans le boîtier de soupape (11).

3. Dispositif de commande selon l'une quelconque des revendications 1 et 2, **caractérisé en ce que** la section transversale des pistons d'étranglement (13a, 13b) diminue dans la direction axiale de telle sorte que la section transversale d'un canal d'étranglement pouvant à chaque fois être fermé par les pistons d'étranglement (13a, 13b) augmente de manière proportionnelle au déplacement axial des pistons d'étranglement (13a, 13b), de préférence la section transversale du canal d'étranglement étant maximale pour une déviation maximale du piston d'étranglement respectif (13a, 13b) .

4. Dispositif de commande selon la revendication 1, **caractérisé en ce que** le premier piston d'étranglement (13b), dans une position de blocage non activée, ferme une alimentation en air comprimé au raccord de charge (8) et **en ce que** le deuxième piston d'étranglement (13a), dans une position de blocage non activée, ferme une sortie d'air comprimé vers l'atmosphère.

5. Dispositif de commande selon l'une quelconque des revendications 1 à 4, **caractérisé en ce que** la surface de commande pneumatiquement active (22b) du premier piston d'étranglement (13b) est inférieure à celle du deuxième piston d'étranglement (13a).

6. Dispositif de commande selon l'une quelconque des revendications 1 à 5, **caractérisé en ce qu'**un régulateur de pression commandable (4) est monté en amont du raccord d'air comprimé (7).

7. Dispositif de commande selon la revendication 6, **caractérisé en ce qu'**une entrée de commande du régulateur de pression (4) est branchée avec le raccord de charge (8) de l'agencement de soupape (2) de telle sorte qu'une augmentation de pression du côté de la charge provoque une augmentation proportionnelle de la pression de travail par la source d'air comprimé d'une valeur ajustée au préalable.

8. Dispositif de commande selon l'une quelconque des revendications 1 à 7, **caractérisé en ce qu'**une poignée (3) déplaçable par rapport à l'agencement de soupape (2) et s'étendant dans la direction de la force de gravité de la charge à soulever est prévue en tant qu'organe d'actionnement, laquelle agit en fonction de la position par rapport à l'agencement de soupape (2) en actionnant un ou l'autre des pistons d'étranglement (13a, 13b).

9. Dispositif de commande selon l'une quelconque des revendications 1 à 8, **caractérisé en ce qu'**un étranglement est prévu dans la sortie d'air comprimé (10).
